# EUROPÄISCHE PATENTSCHRIFT

(11) **EP 1 701 058 B1**
(45) Veröffentlichungstag und Bekanntmachung des Hinweises auf die Patenterteilung: **05.03.2008**
(21) Anmeldenummer: 06011994.8
(22) Anmeldetag: 09.09.2005
(51) Int. Cl.: F16F 15/131, F16F 15/134

(54) **Torsionsschwingungsdämpfer**
Torsional vibration damper
Amortisseur de vibrations de torsion

(30) Priorität: 18.09.2004 DE 102004045366
(43) Veröffentlichungstag der Anmeldung: 13.09.2006
(62) Teilanmeldung aus: 05019610.4
(73) Patentinhaber: ZF FRIEDRICHSHAFEN AG, 88046 Friedrichshafen (DE)
(72) Erfinder: Manger, Alexander, 97508 Grettstadt (DE); Loukas, Alexander, 97199 Ochsenfurt (DE); Bindig, Sebastian, 97529 Sullzheim-Alitzheim (DE); Göbel, Hilmar, 97506 Grafenrheinfeld (DE); Schierling, Bernhard, 97273 Kürnach (DE)

(56) Entgegenhaltungen:
- DE-A1- 3 411 090
- DE-A1- 3 447 926
- DE-A1- 4 311 908
- DE-A1- 10 012 499
- DE-C2- 3 448 520
- DE-C2- 19 549 459
- US-A- 4 729 465
- US-A- 5 878 856
- US-B1- 6 418 620

## Beschreibung

Die Erfindung betrifft einen Torsionsschwingungsdämpfer gemäß dem Oberbegriff des Anspruches 1.

Durch die DE 34 11 090 A1 ist ein Torsionsschwingungsdämpfer mit einem antriebsseitigen Übertragungselement bekannt, das über einen Primärflansch drehfest unmittelbar an einem Antrieb, wie beispielsweise der Kurbelwelle einer Brennkraftmaschine, befestigt ist. Dieses antriebsseitige Übertragungselement weist eine Nabenscheibe auf, die über eine Dämpfungseinrichtung, welche über einen Umfangsfedersatz verfügt, in relativ drehauslenkbarer Wirkverbindung mit einem abtriebsseitigen Übertragungselement steht, das durch eine Schwungmasse und daran befestigte Deckbleche gebildet wird, und im radial inneren Bereich über einen Elementenfuß verfügt, an welchem eine Lagerung axial bewegungsgesichert aufgenommen ist. Da diese Lagerung ihrerseits auf einem Abtrieb, wie beispielsweise einer Getriebeeingangswelle, angeordnet ist, erfolgt die Zentrierung des abtriebsseitigen Übertragungselementes durch die Getriebeeingangswelle, während die Zentrierung des antriebsseitigem Übertragungselementes durch die Kurbelwelle vorgenommen wird. Trotz der unterschiedlichen Bauteile zur Zentrierung von antriebs-und abtriebsseitigem Übertragungselement sind die beiden Übertragungselemente im Wesentlichen um eine gleiche Drehachse bewegbar, da die Getriebeeingangswelle mittels einer üblicherweise als "Pilotlagerung" bezeichneten Lagerung in der Kurbelwelle zentriert ist.

Bedingt durch die unmittelbare Befestigung des Primärflansches des antriebsseitigen Übertragungselementes des bekannten Torsionsschwingungsdämpfers an dem Antrieb ergibt sich das Problem, dass vom Antrieb eingeleitete Schwingungen, die über eine axiale Bewegungskomponente verfügen, ungedämpft auf das antriebsseitige Übertragungselement geleitet werden und dort eine Taumelbewegung um eine Drehachse des Torsionsschwingungsdämpfers verursachen. Da das abtriebsseitige Übertragungselement üblicherweise einer derartigen Taumelbewegung nicht unterworfen ist, muss folglich die Taumelbewegung in der die beiden Übertragungselemente miteinander in Wirkverbindung bringenden Dämpfungseinrichtung abgebaut werden, was eine Bauteilbelastung bei derselben bewirkt.

Bei der Montage des Torsionsschwingungsdämpfers der DE 34 11 090 A1 wird zunächst der Primärflansch des antriebsseitigen Übertragungselementes mittels Befestigungselementen an der Kurbelwelle befestigt, und sodann das gemeinsam mit der Dämpfungseinrichtung und ggf. mit einer Reibungskupplung vormontierte abtriebsseitige Übertragungselement in Verbindung mit dem antriebsseitigen Übertragungselement gebracht, indem das Getriebe und damit die Getriebeeingangswelle in Richtung zum Antrieb verschoben wird, bis die Nabenscheibe der Dämpfungseinrichtung mit dem Primärflansch verbunden werden kann. Sobald die Verbindung hergestellt ist, besteht allerdings kein Zugang mehr zu den dem Primärflansch zugeordneten Befestigungselementen. Dies ist insbesondere dann von Nachteil, wenn sich nach Abschluss der Montage ein Bruch an wenigstens einem der Befestigungselemente bemerkbar machen sollte, und zur Behebung des Schadens noch einmal das Getriebe axial vom Antrieb entfernt werden müsste.

Durch die US 6,418,620 B1 wird ein weiterer Torsionsschwingungsdämpfer gezeigt, bei welchem ein antriebsseitiges Übertragungselement über einen Primärflansch drehfest unmittelbar an einem Antrieb befestigt werden kann, und das über eine Dämpfungseinrichtung in relativ drehauslenkbarer Wirkverbindung mit einem abtriebsseitigen Übertragungselement steht. Das letztgenannte wird durch eine Schwungmasse und eine daran befestigte Nabenscheibe gebildet, wobei die Schwungmasse im radial inneren Bereich über einen Elementenfuß verfügt, welcher über eine Lagerung am antriebsseitigen Übertragungselement aufgenommen ist. Radial außerhalb der Lagerung sind in der Schwungmasse Durchgangsöffnungen für Befestigungselemente, durch welche die Befestigung des Primärflansches am Antrieb erfolgt, vorgesehen. Diese Durchgangsöffnungen können sowohl zur Einführung der Befestigungselemente in den Torsionsschwingungsdämpfer als auch für die anschließende Montage am Antrieb genutzt werden.

Der Erfindung liegt die Aufgabe zugrunde, einen über ein antriebsseitiges Übertragungselement verfügenden Torsionsschwingungsdämpfer derart auszubilden, dass dieser auch nach Abschluss einer Montage Zugang zu einem Bereich gewährt, in welchem eine Verbindung mit einem dem Antrieb bewegungsmäßig zugeordneten Bauteil hergestellt ist, und zudem die Einleitung von Schwingungen mit einer axialen Bewegungskomponente vom Antrieb auf das antriebsseitige Übertragungselement wirksam verhindert.

Diese Aufgabe wird erfindungsgemäß durch das im Kennzeichen des Anspruches 1 angegebene Merkmal gelöst.

Bei einem über einen Elementenfuß verfügenden Bauteil des abtriebsseitigen Übertragungselementes ist erfindungsgemäß vorgesehen, das abtriebsseitige Übertragungselement mit einer Ausnehmung für den Durchgang von Befestigungselementen oder für deren Montage auszubilden, wobei diese Befestigungselemente mit Vorzug durch Niete gebildet werden, welche den Primärflansch des antriebsseitigen Übertragungselementes mit einer Antriebsplatte verbinden. Die Antriebsplatte ist in vorteilhafter Ausgestaltung im Wesentlichen topfförmig mit einem erheblichen axialen Erstreckungsanteil ausgebildet, wodurch ein axialer Durchgangsraum für zumindest ein momentenübertragendes Element, wie beispielsweise eine Antriebswelle, geschaffen wird. Die Antriebsplatte ihrerseits kann mit Vorzug mittels einer lösbaren Befestigung an einer axial flexiblen Platte angebunden sein, die wiederum am Antrieb, wie der Kurbelwelle, befestigt ist.

Dieser Vorteil stellt sich unabhängig davon ein, ob das abtriebsseitige Übertragungselement nun unmittelbar über einen Elementenfuß an dem Abtrieb positioniert ist, oder aber mittels einer Lagerung, die zwischen dem Elementenfuß und dem Abtrieb angeordnet ist, wobei eine derartige Lagerung mit Vorzug als Wälzlagerung ausgebildet ist, ebenso allerdings auch in Form einer Gleitlagerung Bereich gewährt, in welchem eine Verbindung mit dem Antrieb oder einem dem Antrieb zumindest bewegungsmäßig zugeordneten Bauteil hergestellt ist.

Diese Aufgabe wird erfindungsgemäß durch das im Kennzeichen des Anspruches 1 angegebene Merkmal gelöst.

Bei einem über einen Elementenfuß verfügenden Bauteil des abtriebsseitigen Übertragungselementes ist erfindungsgemäß vorgesehen, das abtriebsseitige Übertragungselement mit einer Ausnehmung für den Durchgang von Befestigungselementen oder für deren Montage auszubilden, wobei diese Befestigungselemente mit Vorzug durch Niete gebildet werden, welche den Primärflansch des antriebsseitigen Übertragungselementes mit einer Antriebsplatte verbinden. Die Antriebsplatte ist in vorteilhafter Ausgestaltung im Wesentlichen topfförmig mit einem erheblichen axialen Erstreckungsanteil ausgebildet, wodurch ein axialer Durchgangsraum für zumindest ein momentenübertragendes Element, wie beispielsweise eine Antriebswelle, geschaffen wird. Die Antriebsplatte ihrerseits kann mit Vorzug mittels einer lösbaren Befestigung an einer axial flexiblen Platte angebunden sein, die wiederum am Antrieb, wie der Kurbelwelle, befestigt ist.

Dieser Vorteil stellt sich unabhängig davon ein, ob das abtriebsseitige Übertragungselement nun unmittelbar über einen Elementenfuß an dem Abtrieb positioniert ist, oder aber mittels einer Lagerung, die zwischen dem Elementenfuß und dem Abtrieb angeordnet ist, wobei eine derartige Lagerung mit Vorzug als Wälzlagerung ausgebildet ist, ebenso allerdings auch in Form einer Gleitlagerung realisiert sein kann. Ebenso unabhängig hiervon ist, ob der Elementenfuß an einer abtriebsseitigen Schwungmasse oder an einem mit derselben drehfest verbundenen abtriebsseitigen Ansteuerelement für einen Umfangsfedersatz der Dämpfungseinrichtung vorgesehen ist, wobei dieses Ansteuerelement durch eine Nabenscheibe oder durch Deckbleche gebildet sein kann. Eine Nabenscheibe wird hierbei mit Vorzug an einteiligen Umfangsfedersätzen vorgesehen sein, Deckbleche dagegen in Verbindung mit mehrteiligen Umfangsfedersätzen, wobei die Mehrteiligkeit mit Vorzug durch radial gegeneinander versetzte Teile des Umfangsfedersatzes und einer Nabenscheibe zum Ausdruck kommt, die zwischen den einzelnen Umfangsfedersätzen wirksam ist, wobei die Nabenscheibe sowohl gegenüber dem antriebsseitigen Übertragungselement als auch gegenüber dem abtriebsseitigen Übertragungselement jeweils relativ verdrehbar ist.

Von Vorteil ist die Ausbildung desjenigen Bauteiles des abtriebsseitigen Übertragungselementes, das gegenüber dem Abtrieb positioniert werden soll, mit dem Elementenfuß. Bei direkter Anordnung des abtriebsseitigen Übertragungselementes auf der Getriebeeingangswelle kann dadurch eine geeignete Kontaktfläche geschaffen werden.

Der bereits erwähnte Umfangsfedersatz der Dämpfungseinrichtung ist in einer Kammer des antriebsseitigen Übertragungselementes aufgenommen, die in Achsrichtung zwischen dem Primärflansch und einem demselben zugeordneten Dichtblech ausgebildet und zumindest teilweise mit viskosem Medium befüllt ist. Um einem Verlust dieses viskosen Mediums vorzubeugen, sind Dichtungen vorgesehen, von denen jede mit jeweils einem Befestigungsende an je einem der Übertragungselemente aufgenommen und mit jeweils einem Dichtende in den Erstreckungsbereich des jeweils anderen Übertragungselementes geführt ist. Hierbei wirken mit Vorzug beide Dichtungen berührungsfrei, um die beim erfindungsgemäßen Torsionsschwingungsdämpfer vorhandene hohe Entkopplungsgüte nicht zu beeinträchtigen. Mit Vorzug wirkt hierbei eine erste Dichtung dem Austritt viskosen Mediums aus der Kammer nach radial innen entgegen, während eine zweite Dichtung den Austritt des viskosen Mediums in Richtung zum abtriebsseitigen Übertragungselement verhindert.

Obwohl das antriebsseitige Übertragungselement aufgrund seiner Befestigung an der Kurbelwelle gegenüber dem Antrieb zentriert ist, das abtriebsseitige Übertragungselement dagegen aufgrund seiner Lagerung auf der Getriebeeingangswelle gegenüber dem Abtrieb zentriert ist, sind die beiden Übertragungselemente dennoch zu einer Bewegung im Wesentlichen um eine gemeinsame Drehachse befähigt, insbesondere wenn die Kurbelwelle mittels einer sogenannten "Pilotlagerung" das antriebsseitige Ende der Getriebeeingangswelle zentrierend aufnimmt.

Die Erfindung wird anhand eines Ausführungsbeispieles näher erläutert. Es zeigt:
- Figur 1:: Einen Längsschnitt durch einen mit Reibungskupplung versehenen Torsionsschwingungsdämpfer mit zweiteiligem Umfangsfedersatz und Anordnung einer Schwungmasse eines abtriebsseitigen Übertragungselementes über einer als Wälzlagerung ausgebildete Lagerung auf einer Getriebeeingangswelle;
- Figur 2:: eine vergrößerte Herauszeichnung des in Fig. 1 eingekreisten Bereiches, allerdings mit Ausbildung der Lagerung als Gleitlagerung;
- Figur 3:: wie Fig. 2, aber mit direkter Anordnung der Schwungmasse auf der Getriebeeingangswelle;
- Figur 4:: wie Fig. 1, aber mit einteiliger Ausbildung des Umfangsfedersatzes;
- Figur 5:: wie Fig. 4, aber mit Anordnung des abtriebsseitigen Übertragungselementes über eine Nabenscheibe auf der Lagerung.

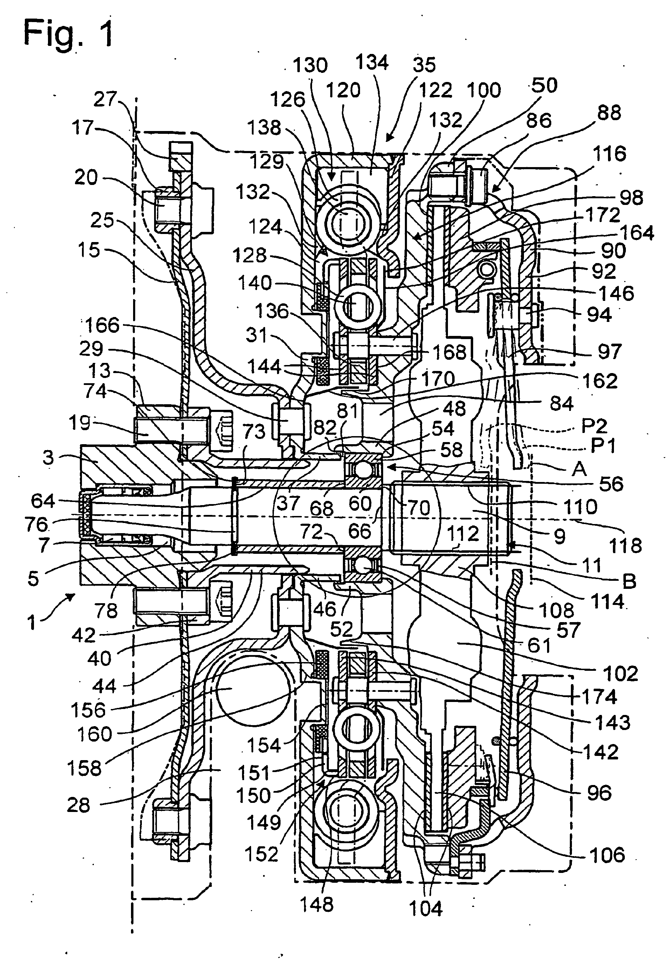

In Fig. 1 ist als Antrieb 1 eine Kurbelwelle 3 einer Brennkraftmaschine dargestellt, die in einer mittigen Aufnahme 5 über eine Pilotlagerung 7 zur Zentrierung einer Getriebeeingangswelle 9 verfügt, die, bezogen auf das dargestellte System, als Abtrieb 11 wirksam ist. Die Kurbelwelle 3 weist einen Kurbelwellenflansch 13 auf, an welchem über lösbare Befestigungsmittel 19 eine axial elastische Platte 15 befestigt ist, die sich nach radial außen erstreckt und dort eine Verbindung eingeht mit einer Antriebsplatte 25. Zur Herstellung dieser Verbindung sind an der axial elastischen Platte 15 Gewindehülsen 17 befestigt, in welche lösbare Befestigungsmittel 20 nach Durchdringung von Öffnungen in der Antriebsplatte 25 einführbar sind. Die Antriebsplatte 25 ihrerseits trägt einen Zahnkranz 27, der zum Eingriff mit einem nicht dargestellten Starterritzel vorgesehen ist.

Die Antriebsplatte 25 verläuft insbesondere im radial inneren Bereich mit einer deutlichen Axialkomponente, wodurch ein axialer Durchgangsraum 28 für zumindest ein momentenübertragendes Element 160, wie beispielsweise eine Antriebswelle, geschaffen wird. Im radial innersten Bereich geht die Antriebsplatte 25 wieder in einen Bereich mit im Wesentlichen radialer Erstreckung über, welcher mittels Befestigungselementen 29 zur festen Verbindung der Antriebsplatte 25 mit einem Primärflansch 31 eines antriebsseitigen Übertragungselementes 35 vorgesehen ist. Die Befestigungselemente 29 sind vorzugsweise als Niete oder Schrauben ausgebildet, denkbar sind aber auch eine Verschleißung oder eine Verstemmung als Befestigungselement 29. Sowohl das radial innere Ende der Antriebsplatte 25 als auch das radial innere Ende des Primärflansches 31 vermögen sich jeweils auf einem im Wesentlichen axial verlaufenden Schenkel 44 eines Führungshohlzapfens 40 abzustützen, der, im Wesentlichen senkrecht zum Axialschenkel 44, über einen im Wesentlichen radial verlaufenden Schenkel 42 zur Befestigung am Kurbelwellenflansch 13 mittels der bereits erwähnten lösbaren Befestigungsmittel 19 dient. Wie aus Fig. 1 sehr gut ersichtlich ist, dient der Führungshohlzapfen 40 für eine Zentrierung von Antriebsplatte 25 und Primärflansch 31 gegenüber einer Drehachse 112, die für Kurbelwelle 3 und Getriebeeingangswelle 9 im Wesentlichen gleich ist.

Das bereits erwähnte radial innere Ende des Primärflansches 31 ist mit einer Umkantung 37 versehen, die sich im Wesentlichen in Richtung zum Abtrieb 11 erstreckt und mit ihrem axial freien Ende mittels eines in Achsrichtung vorgesehenen ersten Spaltes 81 von einer auf der Getriebeeingangswelle 9 angeordneten Lagerung 56 getrennt ist, während das freie Ende der Umkantung 37 mittels eines radialen zweiten Spaltes 82 von einem Axialvorsprung 52 an einem Elementenfuß 48 getrennt ist, wobei dieser Elementenfuß 48 an seiner der Lagerung 56 zugewandten radialen Innenseite mit einer Radialprofilierung 54 versehen ist, um die Lagerung 56 in Achsrichtung fest aufnehmen zu können. Die Lagerung 56 ist an ihrer radialen Innenseite durch Aufpressen auf die Getriebeeingangswelle 9 gegenüber derselben bewegungsgesichert aufgenommen.

Näher auf die Lagerung 56 eingehend, ist diese gemäß Fig. 1 als Wälzlagerung 57 ausgebildet, mit einem radial äußeren Lagerring 58, der mit seiner radialen Außenseite in der Radialprofilierung 54 des Elementenfußes 48 axial festgehalten ist, während der Lagerring 58 an seiner radialen Innenseite über Wälzelemente 61 mit einem radial inneren Lagerring 60 wirkverbunden ist, der auf die Getriebeeingangswelle 9 gepresst ist.

Obwohl somit der Elementenfuß 48, der Teil einer Schwungmasse 50 eines abtriebsseitigen Übertragungselementes 116 ist, über die Lagerung 56 axial bewegungsgesichert auf der Getriebeeingangswelle 9 angeordnet ist, ist die Getriebeeingangswelle 9 mit Vorzug durch eine Hülse 64 umschlossen, die mit einem der Lagerung 56 zugewandten abtriebsseitigem Ende 72 den radial inneren Lagerring 60 gegen eine Bewegung zum Antrieb 1 hin sichern soll, und somit diesen Lagerring 60 axial zwischen sich und einer Schulter 70 der Getriebeeingangswelle 9 hält, wobei diese Schulter 70 aufgrund eines Querschnittsüberganges an der Getriebeeingangswelle 9 entsteht. Die bereits erwähnte Hülse 64 stützt sich mit ihrem von der Lagerung 56 abgewandten, mithin also antriebsseitigen Ende 73 an einem Radialvorsprung 74 der Getriebeeingangswelle 9 ab, wobei dieser Radialvorsprung 74 durch einen in eine Vertiefung 76 der Getriebeeingangswelle 9 eingelassenen radialen Spannring 78 gebildet wird. Durch ein Zusammenwirken dieser Hülse 64 mit der Getriebeeingangswelle 9 dient die erwähnte Schulter 70 als erstes Fixierelement 66 für die Lagerung 56, das der Lagerung 56 zugewandte abtriebsseitige Ende 72 der Hülse 64 dagegen als zweites Fixierelement 68. Beide Fixierelemente 66, 68 unterstützen die axiale Festlegung der Lagerung 56 gegenüber der Getriebeeingangswelle 9, die durch das erwähnte Aufpressen bereits vorliegt.

Der Elementenfuß 48, der in der Umkantung 37 des Primärflansches 31 eine Hilfszentrierung 46 vorfindet, dient gemäß Fig. 1 als radiale Innenbegrenzung der Schwungmasse 50, die unmittelbar radial außerhalb des Elementenfußes 48 Ausnehmungen 84 aufweist, die im Wesentlichen mit den Befestigungselementen 29 fluchten und zum Durchgang und/oder zur Montage dieser Befestigungselemente 29 dienen. Wiederum radial außerhalb dieser Ausnehmungen 84 schließt sich eine Vernietung 146 an, durch welche Deckbleche 142, 143 drehfest an der Schwungmasse 50 aufgenommen sind. Die Deckbleche 142, 143 dienen hierbei als abtriebsseitiges Ansteuerelement 144 einer Dämpfungseinrichtung 130, die entsprechend Fig. 1 über einen zweiteiligen Umfangsfedersatz 129 verfügt. Ein erster Teil 126 des Umfangfedersatzes 129 ist im radial äußeren Bereich einer Kammer 124 angeordnet, die axial zwischen dem Primärflansch 31 und einem Dichtblech 122 vorgesehen ist, wobei das letztgenannte Dichtblech 122 an einem Axialansatz 120 des Primärflansches 31 befestigt ist, vorzugsweise mittels einer Schweißnaht. Der Axialansatz 120 erstreckt sich hierbei im Wesentlichen in Achsrichtung am Außenumfang des Radialflansches 31.

Dieser Axialansatz 120 dient mit seiner radialen Innenseite als Führungsfläche für Gleitschuhe 134, die ihrerseits zur Aufnahme des ersten Teiles 126 des Umfangfedersatzes 129 dienen. Ferner sind an Primärflansch 31 und Dichtblech 122 jeweils antriebsseitige Ansteuerelemente 132 vorgesehen, welche den ersten Teil 126 des Umfangsfedersatzes 129ansteuern, der sich daraufhin mit seinen entgegengesetzten Federsatzenden an ersten Ansteuermitteln 138 einer Nabenscheibe 136 abstützen. Diese Nabenscheibe 136 verfügt über zweite Ansteuermittel 140, durch welche zweite Teile 128 des Umfangsfedersatzes 129 beaufschlabar sind, wobei sich diese zweiten Teile 128 mit ihren entgegengesetzten Federsatzenden an den bereits erwähnten Deckblechen 142, 143 und damit am abtriebsseitigen Ansteuerelement 144 abstützen.

Das antriebsseitige Deckblech 143 steht mittels eines Formschlusses 148 in drehfester Verbindung mit einer Antriebsscheibe 149, die über eine Innenverzahnung 151 verfügt und über diese Innenverzahnung in Wirkverbindung mit zumindest einem Planetenrad 156 steht, das jeweils auf einer Lagerausdrückung 154 des Primärflansches 31 gelagert ist. Dem Primärflansch 31 kommt somit die Funktion eines Planetenträgers 158 eines Planetengetriebes 152 zu, während die Antriebsscheibe 149 als Hohlrad 150 wirkt.

Die Kammer 124 ist zumindest teilweise mit viskosem Medium gefüllt, weshalb nach radial innen eine erste Dichtung 162 und in Achsrichtung eine zweite Dichtung 164 vorgesehen ist. Die erste Dichtung 162 wird mit einem Befestigungsende 166 durch die Befestigungselemente 29 am Primärflansch 31 und damit am antriebsseitigen Übertragungselement 35 gesichert und greift mit einem Dichtungsende 170, das mit einem zum Primärflansch 31 vorspringenden Axialansatz 174 der Schwungmasse 50 überlappt, in den Erstreckungsbereich des abtriebsseitigen Übertragungselementes 116 ein. Die zweite Dichtung 164 ist durch die Vernietung 146 mit einem Befestigungsende 168 an der Schwungmasse 50 und damit am abtriebsseitigen Übertragungselement 116 befestigt und greift radial nach außen, wo die Dichtung 164 mit ihrem Dichtungsende 172 radial mit der Innenseite des Dichtbleches 122 überlappt, und demnach in den Erstreckungsbereich des antriebsseitigen Übertragungselementes 35 eingreift. Mit Vorzug sind beide Dichtungen 162, 164 an ihren jeweiligen Dichtungsenden 166, 168 gegenüber dem zugeordneten Bereichen des jeweiligen Übertragungselementes 35, 116 berührungsfrei, so dass keine Reibung und damit eine Reduzierung der Entkopplungsgüte der Dämpfungseinrichtung 130 befürchtet werden muss.

Zurückkommend auf die Schwungmasse 50, nimmt diese im Bereich ihres radialen Außenumfanges durch Befestigungsmittel 86 ein Gehäuse 92 einer Reibungskupplung 88 auf, deren Druckplatte 90 über eine durch Lagerzapfen 94 im Gehäuse 92 gehaltene Membranfeder 96 verfügt, durch welche eine Anpressplatte 98 axial beaufschlagbar ist. Axial zwischen dieser Anpressplatte 98 und einer an der Schwungmasse 50 zur Abtriebsseite hin vorgesehenen Anlagefläche 100 sind Reibbeläge 104 einer Kupplungsscheibe 102 vorgesehen, wobei die Reibbeläge 104 an einer Belagfederung 106 der Kupplungsscheibe 102 beidseits aufgenommen sind. Im radial inneren Bereich weist die Kupplungsscheibe 102 eine Kupplungsnabe 108 auf, die über eine Verzahnung 110 drehfest, aber axial verlagerbar, auf einem Verzahnungsabschnitt 112 der Getriebeeingangswelle 9 angeordnet ist. Die Membranfeder 96 der Reibungskupplung 88 wirkt mit einem strichliniert angedeuteten Ausrücker 114 zusammen, der in seiner eingezeichneten Stellung A Membranfederzungen 97 die strichliniert eingezeichnete erste Position P1 gewährt, in welcher die Reibbeläge 104 der Kupplungsscheibe 102 kraftschlüssig zwischen der Anlagefläche 100 der Schwungmasse 50 und der Anpressplatte 98 eingespannt ist, und zur Übertragung eines an der Schwungmasse 50 anliegenden Drehmomentes über die Kupplungsscheibe 102 auf die Getriebeeingangswelle 9 befähigt ist. Um von diesem eingerückten Zustand in den ausgerückten Zustand zu gelangen, wird der Ausrücker 114 nach links in seine eingezeichnete Stellung B verlagert und beaufschlagt dadurch die Membranfederzungen 97 in die ebenfalls strichliniert eingezeichnete zweite Position P2, in welcher die Reibbeläge 104 zwischen Anlagefläche 100 und Anpressplatte 98 entlastet sind, so dass die Übertragung eines Momentes zwischen Schwungmasse 50 und Getriebeeingangswelle 9 zumindest reduziert ist, die Reibungskupplung 88 sich demnach zumindest in teilausgerücktem Zustand befindet.

Bevor der erfindungsgemäße Torsionsschwingungsdämpfer in einem Kraftfahrzeug montiert ist, soll bereits während der Verpackungs- und Transportphase eine unerwünscht starke axiale und/oder radiale Verlagerung der beiden Übertragungselemente 35, 116 zueinander vermieden werden, um Schäden am Umfangsfedersatz 129 sowie an den Dichtungen 162, 164 wirksam verhindern zu können. Aus diesem Grund greift das abtriebsseitige Übertragungselement 116 mit seinem Elementenfuß 48 an der als Hilfszentrierung 46 wirksamen Umkantung 37 des Primärflansches 31 und damit des antriebsseitigen Übertragungselementes 35 an, so dass lediglich in der Größenordnung der bereits erwähnten Spalte 81, 82 zwischen dem Axialvorsprung 52 des Elementenfußes 48 und der Hilfszentrierung 46 eine Radial- sowie eine aufeinander zugerichtete Axialverlagerung der beiden Übertragungselemente 35, 116 möglich ist.

Bevor eine Montage des Torsionsschwingungsdämpfers im Kraftfahrzeug erfolgt, besteht auf jeden Fall bereits mittels der Befestigungselemente 29 eine feste Anbindung der Antriebsplatte 25 am Primärflansch 31. Die Reibungskupplung 88 kann, muss aber zu diesem Zeitpunkt noch nicht an der Schwungmasse 50 des abtriebsseitigen Übertragungselementes 50 befestigt sein.

Für die Montage wird die Lagerung 56 gemeinsam mit dem abtriebsseitigem Übertragungselement 116 auf der Getriebeeingangswelle 9 aufgepresst und zwar vorzugsweise in einer Position, in welcher die Lagerung 56 an der Schulter 70 der Getriebeeingangswelle 9 axial zur Anlage kommt. Dadurch ist bereits das erste Fixierelement 66 wirksam. Anschließend wird die Hülse 64 über die Getriebeeingangswelle 9 geschoben und durch Einbringen des radialen Spannringes 78 in die Vertiefung 76 der Getriebeeingangswelle 9 positioniert. Damit liegt auch das zweite Fixierelement 68 für die Lagerung 56 vor. Anschließend wird das die Getriebeeingangswelle 9 beinhaltende Getriebe in Richtung zum Antrieb 1, also zur Brennkraftmaschine hin, verlagert und dabei die Getriebeeingangswelle 9 immer weiter in die Aufnahme 5 der Kurbelwelle 3 eingeschoben. Bei dieser Bewegung gleitet die Antriebsplatte 25 sowie der Primärflansch 31 mit dem jeweiligen radial inneren Ende auf die axialen Schenkel 44 des Führungshohlzapfens 40, so dass von diesem Zeitpunkt an auch das antriebsseitige Übertragungselement 35 eine Zentrierung findet. Sobald die Getriebeeingangswelle 9 mit ihrem antriebsseitigem Ende in der Pilotlagerung 7 aufgenommen ist, liegt darüber hinaus auch eine Zentrierung der Getriebeeingangswelle 9 in der Kurbelwelle 3 vor, so dass beide Wellen 3, 9 im Wesentlichen über die gleiche Drehachse 118 verfügen. Wenn bei dieser Annäherungsbewegung der beiden Wellen 3, 9 aneinander die Antriebsplatte 25 axial in Anlage an der axial elastischen Platte 15 gekommen ist, kann über die Befestigungsmittel 20 eine endgültige Verbindung hergestellt werden, wobei diese aufgrund der Zentrierung des antriebsseitigen Übertragungselementes 35 auf dem Führungshohlzapfen 40 problemlos vonstatten geht. Von diesem Zeitpunkt an verliert die vor der Montage benötigte Hilfszentrierung 37 ihre Funktion, da nun das antriebsseitige Übertragungselement 35 über die Antriebsplatte 25 an der Kurbelwelle 3 und damit am Antrieb 1 zentriert ist, während das abtriebsseitige Übertragungselement 116 weiterhin über die Lagerung 56 an der Getriebeeingangswelle 9 und damit am Abtrieb 11 zentriert ist. Wegen dieser besonderen Zentrierung der beiden Übertragungselemente 35, 116 zueinander sind jederzeit durch geringfügige axiale Verschiebebewegungen der Getriebeeingangswelle 9 gegenüber der Kurbelwelle 3 axiale Korrekturverlagerungen zwischen den beiden Übertragungselementen 35, 116 möglich, so dass für den Fall, dass zwischen Antriebsplatte 25 und Primärflansch 31, sowie zwischen abtriebsseitigem Ansteuerelement 144 und Schwungmasse 50 Toleranzen vorhanden sind, die sich in ungünstiger Weise addieren, ein Ausgleich vorgenommen werden kann. Dadurch sind die beiden Übertragungselemente 35, 116 in Achsrichtung jeweils derart zueinander einstellbar, dass jeweils optimale Toleranzen zwischen diesen Übertragungselementen 35, 116, insbesondere hierbei aber innerhalb der Dämpfungseinrichtung 130 bestehen, so dass eine optimale Entkopplungsgüte durch die Dämpfungseinrichtung 130 erzielt werden kann, die nicht durch Verspannungen oder ungewollte Reibungen innerhalb der Dämpfungseinrichtung 130 beeinträchtigt sind. Insbesondere bei Bewegungen der Kurbelwelle 3 mit einer Axialkomponente, üblicherweise als Taumelbewegungen bezeichnet, kann die axial elastische Platte 15 bereits einen Teil dieser Taumelbewegungen vor Weitergabe an das antriebsseitige Übertragungselement 35 ausfiltern, während das vorgenannte Übertragungselement 35 den Restanteil dieser Taumelbewegungen praktisch nicht auf das abtriebsseitige Übertragungselement 116 übertragen kann.

Ebenso vorteilhaft gestaltet sich ein Übergang zwischen dem ein- und dem ausgerückten Zustand, bei welchem Axialkräfte der Membranfeder 96 über die Anpressplatte 98 und die Kupplungsscheibe 102 auf die Schwungmasse 50 des abtriebsseitigen Übertragungselementes 116 übertragen werden. Da sich dieses Übertragungselement 116 allerdings axial an der Lagerung 56 abzustützen vermag, die ihrerseits auf der Getriebeeingangswelle 9 und damit abtriebsseitig ortsfest ist, wird dieser Kraftfluss niemals die Abtriebsseite des Torsionsschwingungsdämpfers verlassen können. Auch der Ein- oder Ausrückvorgang wird demnach keine Veränderung der Situation in der Dämpfungseinrichtung 130 auslösen.

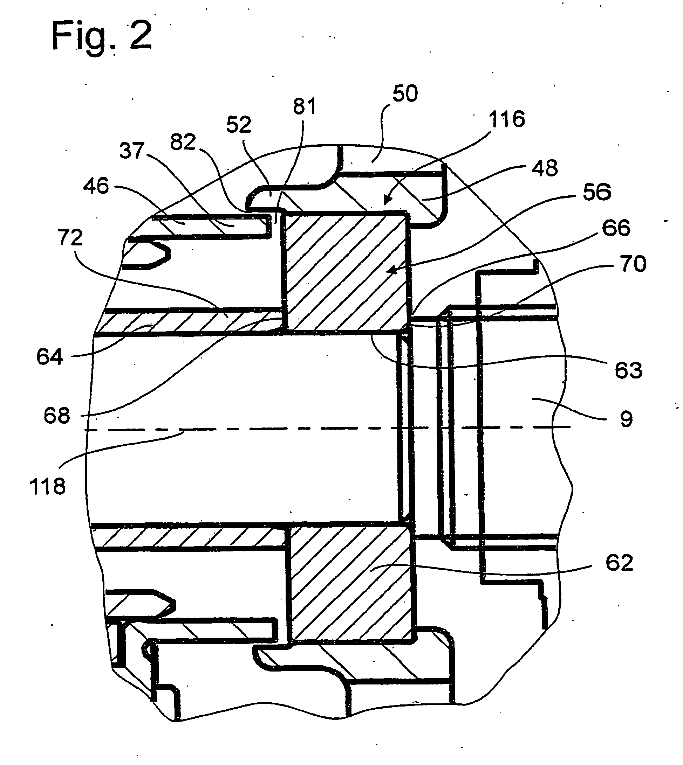

Fig. 2 entspricht der eingekreisten Darstellung in Fig. 1, allerdings ist die Lagerung 56 nun durch eine Gleitlagerung 62 gebildet. Ebenso wie bei Verwendung einer Wälzlagerung wird die Gleitlagerung 62 axial fest am Elementenfuß 48 der Schwungmasse 50 des abtriebsseitigen Übertragungselementes 116 aufgenommen sein, während allerdings die radiale Innenseite der Gleitlagerung 62 zur Gewährleistung einer Relativdrehbewegung des abtriebsseitigen Übertragungselementes 116 gegenüber der Getriebeeingangswelle 9 gleitend auf der Getriebeeingangswelle 9 angeordnet sein muss. Die axiale Bewegungssicherung der Gleitlagerung 62 auf der Getriebeeingangswelle 9 erfolgt demnach allein über die Fixierelemente 66, 68, also durch die Schulter 70 an der Getriebeeingangswelle 9 sowie durch das abtriebsseitige Ende 72 der Hülse 64. Sehr gut ersichtlich in Fig. 2 ist außerdem die Wirkung der Hilfszentrierung 64 gegenüber dem Axialvorsprung 52 am Elementenfuß 48.

Zugunsten einer verbesserter Drehbarkeit der Gleitlagerung 62 auf der Getriebeeingangswelle 9 kann die Gleitlagerung 62 an ihrer radialen Innenseite mit einer gleitverbessernden Beschichtung 63 versehen sein.

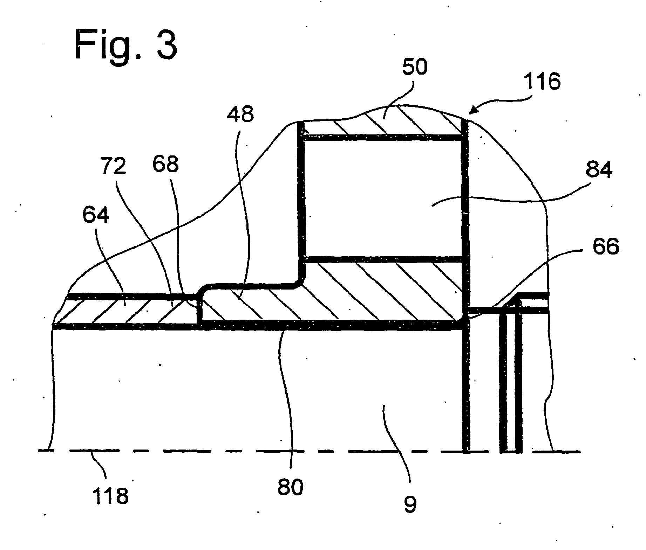

Eine gleitverbessernde Beschichtung 80 kann auch unmittelbar am Elementenfuß 48 vorgesehen sein, wenn dieser, wie aus der vereinfacht dargestellten Fig. 3 ersichtlich, an der radialen Innenseite des Elementenfußes 48 des abtriebsseitigen Übertragungselementes 116 vorgesehen ist. Bei dieser Ausführung sitzt das abtriebsseitige Übertragungselement 116 - unter Verzicht auf eine Lagerung 56 - unmittelbar auf der Getriebeeingangswelle 9, und wird ebenso wie die Gleitlagerung nach Fig. 2 allein durch die Fixierelemente 66, 68 axial bewegungsgesichert.

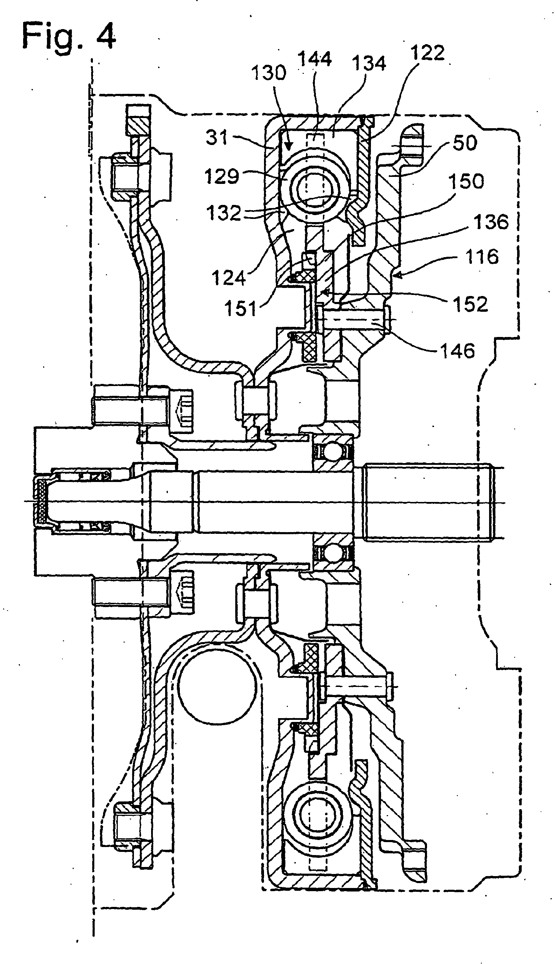

Fig. 4 unterscheidet sich von Fig. 1 durch die Ausbildung des Umfangsfedersatzes 129 der Dämpfungseinrichtung 130, wobei der Umfangsfedersatz hier lediglich einteilig ist. Ebenso wie bei Fig. 1 sind allerdings an Primärflansch 31 und Dichtblech 122 antriebsseitige Ansteuerelemente 132 zur Beaufschlagung des Umfangsfedersatzes 129 vorgesehen, der sich anderenends am abtriebsseitigen Ansteuerelement 144, vorgesehen an der Nabenscheibe 136, abstützt. Abweichend von der Ausführung nach Fig. 1 ist die Nabenscheibe 136 hier unmittelbar an der Schwungmasse 50 und damit drehfest mit dem abtriebsseitigen Übertragungselement 116 aufgenommen.

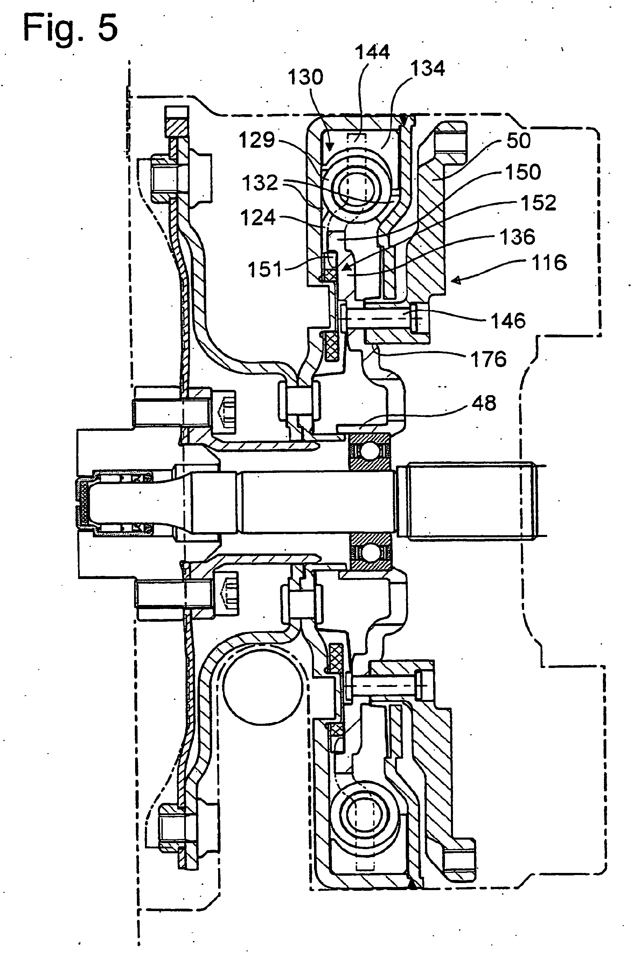

Fig. 5 unterscheidet sich von der Ausbildung nach Fig. 4 durch die Maßnahme, den Elementenfuß 48 an der Nabenscheibe 136 anzuformen, so dass die Schwungmasse 50 des abtriebsseitigen Übertragungselementes 116 ihre Zentrierfunktion an die Nabenscheibe 136 abgibt. Stattdessen ist die Schwungmasse 50 an einem Stützvorsprung 176 der Nabenscheibe 136 zentriert und durch die Vernietung 146 fest mit der Nabenscheibe 136 verbunden.

### Bezugszeichenliste

- 1: Antrieb
- 3: Kurbelwelle
- 5: Aufnahme
- 7: Pilotlagerung
- 9: Getriebeeingangswelle
- 11: Abtrieb
- 13: Kurbelwellenflansch
- 15: axial elastische Platte
- 17: Gewindehülse
- 19, 20: lösbare Befestigungsmittel
- 25: Antriebsplatte
- 27: Zahnkranz
- 28: axialer Durchgangsraum
- 29: Befestigungselemente
- 31: Primärflansch
- 35: antriebsseitiges Übertragungselement
- 37: Umkantung
- 40: Führungshohlzapfen
- 42,44: Schenkel des Führungshohlzapfens
- 46: Hilfszentrierung
- 48: Elementenfuß
- 50: Schwungmasse
- 52: Axialvorsprung am Elementenfuß
- 54: Radialprofilierung
- 56: Lagerung
- 57: Wälzlagerung
- 58,60: Lagerring
- 61: Wälzelemente
- 62: Gleitlagerung
- 63: Beschichtung
- 64: Hülse
- 66, 68: Fixierelemente
- 70: Schulter
- 72, 73: Ende
- 74: Radialvorsprung
- 76: Vertiefung
- 78: radialer Spannring
- 80: Beschichtung
- 81, 82: Spalt
- 84: Ausnehmungen
- 86: Befestigungsmittel
- 88: Reibungskupplung
- 90: Druckplatte
- 92: Gehäuse
- 94: Lagerzapfen
- 96: Membranfeder
- 97: Membranfederzungen
- 98: Anpressplatte
- 100: Anlagefläche der Schwungmasse
- 102: Kupplungsscheibe
- 104: Reibbeläge
- 106: Belagfederung
- 108: Kupplungsnabe
- 110: Verzahnung
- 112: Verzahnungsabschnitt
- 114: Ausrücker
- 116: abtriebsseitiges Übertragungselement
- 118: Drehachse
- 120: Axialansatz am Primärflansch
- 122: Dichtblech
- 124: Kammer
- 126, 128: Teile des Umfangsfedersatzes
- 129: Umfangsfedersatz
- 130: Dämpfungseinrichtung
- 132: antriebsseitige Ansteuerelemente
- 134: Gleitschuhe
- 136: Nabenscheibe
- 138: erste Ansteuermittel
- 140: zweite Ansteuermittel
- 142, 143: Deckbleche
- 144: abtriebsseitiges Ansteuerelement
- 146: Vernietung
- 148: Formschluss
- 149: Antriebsscheibe
- 150: Hohlrad
- 151: Innenverzahnung
- 152: Planetengetriebe
- 154: Lagerausdrückung
- 156: Planetenrad
- 158: Planetenträger
- 160: momentenübertragendes Element
- 162, 164: Dichtung
- 166, 168: Befestigungsende
- 170,172: Dichtungsende
- 174: Axialansatz
- 176: Stützvorsprung

## Patentansprüche

1. Torsionsschwingungsdämpfer mit einem drehfest an einem Antrieb (1) angreifenden, mit einem Primärflansch (31) versehenen antriebsseitigen Übertragungselement (35) und einem über eine Dämpfungseinrichtung (130) relativ zum antriebsseitigen Übertragungselement (35) drehauslenkbaren abtriebsseitigen Übertragungselement (116), das über ein zumindest ein abtriebsseitiges Ansteuerelement (144) für einen der Dämpfungseinrichtung (130) zugeordneten Umfangsfedersatz (129) aufweisendes Bauteil (136) sowie über eine Schwungmasse (50) verfügt, von denen entweder das Bauteil (136) oder die Schwungmasse (50) einen Elementenfuß (48) zur zentrierten Aufnahme an einem Abtrieb (11) mittels einer Lagerung (56) aufweist,
**dadurch gekennzeichnet,**
**dass** das den Elementenfuß (48) aufweisende Bauteil (50; 136) radial außerhalb des Elementenfußes (48) Ausnehmungen (84) für den Durchgang und/oder zur Montage von Befestigungselementen (29) aufweist, die eine Antriebsplatte (25) für das antriebsseitige Übertragungselement (35) mit dem Primärflansch (31) desselben verbinden, wobei die Antriebsplatte (25) eine axiale Distanz zwischen dem Primärflansch (31) und einer am Antrieb (1) befestigten, axial elastischen Platte (15) überbrückt.

2. Torsionsschwingungsdämpfer nach Anspruch 1,
**dadurch gekennzeichnet,**
**dass** das antriebsseitige Übertragungselement (35) zur Aufnahme des Umfangsfedersatzes (129) über eine mit viskosem Medium befüllte Kammer (124) verfügt, die sich axial zwischen dem Primärflansch (31) und einem demselben zugeordneten Dichtblech (122) erstreckt.

3. Torsionsschwingungsdämpfer nach Anspruch 2,
**dadurch gekennzeichnet,**
**dass** der mit viskosem Medium befüllten Kammer (124) des antriebsseitigen Übertragungselementes (35) eine gegenüber den Ausnehmungen (84) des den Elementenfuß (48) aufweisenden Bauteils (50; 136) wirksame Dichtung (162) zugeordnet ist.

4. Torsionsschwingungsdämpfer nach Anspruch 1, 2 oder 3 mit einem das Ansteuerelement (144) für einen der Dämpfungseinrichtung (130) zugeordneten Umfangsfedersatz (129) aufweisenden Bauteil (136) in Form einer Nabenscheibe,
**dadurch gekennzeichnet,**
**dass** die Schwungmasse (50) des abtriebsseitigen Übertragungselementes (116) gegenüber der Nabenscheibe (136) weiter nach radial innen geführt ist, und dort den Elementenfuß (48) zur Positionierung gegenüber der Lagerung (56) aufweist.

5. Torsionsschwingungsdämpfer nach Anspruch 1, 2 oder 3,
**dadurch gekennzeichnet,**
**dass** die Nabenscheibe (136) gegenüber der Schwungmasse (50) radial weiter nach innen geführt ist, und dort den Elementenfuß (48) zur Positionierung gegenüber der Lagerung (56) aufweist.

6. Torsionsschwingungsdämpfer nach Anspruch 1,
**dadurch gekennzeichnet,**
**dass** die axial elastische Platte (15) gemeinsam mit einem Führungshohlzapfen (40) am Antrieb (1) befestigt ist, wobei der Führungshohlzapfen (40) zur Zentrierung des antriebsseitigen Übertragungselementes (35) zumindest während einer Montage am Antrieb (1) vorgesehen ist.

7. Torsionsschwingungsdämpfer nach Anspruch 1 oder 6,
**dadurch gekennzeichnet,**
**dass** der Führungshohlzapfen (40) axial in den Erstreckungsbereich von Antriebsplatte (25) und Primärflansch (31) eingreift.

8. Torsionsschwingungsdämpfer nach einem der Ansprüche 1, 6 oder 7,
**dadurch gekennzeichnet,**
**dass** die Antriebsplatte (25) im wesentlichen topfförmig mit einem erheblichen axialen Erstreckungsanteil zur Schaffung eines axialen Durchgangsraumes (28) für zumindest ein momentenübertragendes Element (160) ausgebildet ist.

9. Torsionsschwingungsdämpfer nach wenigstens einem der Ansprüche 3 bis 8,
**dadurch gekennzeichnet,**
**dass** der mit viskosem Medium befüllten Kammer (124) zusätzlich zur ersten Dichtung (162) eine zweite Dichtung (164) axial benachbart zum abtriebsseitigen Übertragungselement (116) zugeordnet ist.

10. Torsionsschwingungsdämpfer nach einem der Ansprüche 3 bis 9,
**dadurch gekennzeichnet,**
**dass** die erste Dichtung (162) mit einem Befestigungsende (166) am Primärflansch (31) des antriebsseitigen Übertragungselementes (35) angreift und mit einem Dichtungsende (170) in den Erstreckungsbereich eines Axialansatzes (174) am abtriebsseitigen Übertragungselement (116) geführt ist, den das Dichtungsende (117) im wesentlichen radial umschließt.

11. Torsionsschwingungsdämpfer nach Anspruch 9,
**dadurch gekennzeichnet,**
**dass** die zweite Dichtung (164) mit einem Befestigungsende (168) an der Schwungmasse (50) des abtriebsseitigen Übertragungselementes (116) befestigt ist, und mit einem Dichtungsende (172) radial in den Erstreckungsbereich des Dichtbleches (122) des antriebsseitigen Übertragungselementes (35) geführt ist.

12. Torsionsschwingungsdämpfer nach einem der Ansprüche 9 bis 11,
**dadurch gekennzeichnet,**
**dass** wenigstens eine der beiden Dichtungen (162,164) mit ihrem Befestigungsende (166,168) derart am jeweiligen Übertragungselement (35,116) aufgenommen und in Richtung zum jeweils anderen Übertragungselement (35,116) geführt ist, dass sie mit ihrem jeweiligen Dichtungsende (170,172) im wesentlichen berührungsfrei gegenüber dem letztgenannten Übertragungselement (35,116) zur Ausrichtung gelangt.

13. Torsionsschwingungsdämpfer nach einem der Ansprüche 1 bis 12,
**dadurch gekennzeichnet,**
**dass** das abtriebsseitige Ansteuerelement (144) am abtriebsseitigen Übertragungselement (116) für den Umfangsfedersatz (129) durch zumindest ein an der Schwungmasse (50) dieses Übertragungselementes (116) befestigtes Deckblech (142,143) gebildet ist, das über einen radial ersten Teil (126) des Umfangsfedersatzes (129) mit einer Nabenscheibe (136) verbunden ist, die ihrerseits über einen radial zweiten Teil (128) des Umfangsfedersatzes (129) mit antriebsseitigen Ansteuerelementen (132) des antriebsseitigen Übertragungselementes (35) in Verbindung steht, wobei die Nabenscheibe (136) sowohl gegenüber dem antriebsseitigen Übertragungselement (35) als auch gegenüber dem abtriebsseitigen Übertragungselement (116) relativ drehbar ist.

14. Torsionsschwingungsdämpfer nach einem der Ansprüche 1 bis 13,
**dadurch gekennzeichnet,**
**dass** das abtriebsseitige Ansteuerelement (144) am abtriebsseitigen Übertragungselement (116) für den Umfangsfedersatz (129) durch eine an der Schwungmasse (50) dieses Übertragungselementes (116) befestigte Nabenscheibe (136) gebildet ist, die über den Umfangsfedersatz (129) mit antriebsseitigen Ansteuerelementen (132) des antriebsseitigen Übertragungselementes (35) in Wirkverbindung steht.

15. Torsionsschwingungsdämpfer nach einem der Ansprüche 1 bis 14,
**dadurch gekennzeichnet,**
**dass** das abtriebsseitige Übertragungselement (116) an seiner Schwungmasse (50) zur Aufnahme einer Reibungskupplung (88) dient.

16. Torsionsschwingungsdämpfer nach einem der Ansprüche 1 bis 15,
**dadurch gekennzeichnet,**
**dass** der Elementenfuß (48) an seinem der Getriebeeingangswelle (9) zugewandten Innendurchmesser mit einer reibungsvermindernden Beschichtung (80) versehen ist.

## Claims

1. Torsional vibration damper having a drive-side transmission element (35) which acts fixedly in terms of rotation on a drive (1) and is provided with a primary flange (31), and having an output-side transmission element (116) which can be deflected rotatably via a damping device (130) relative to the drive-side transmission element (35) and has a component (136) which has at least one output-side actuating element (144) for a peripheral spring assembly (129) which is assigned to the damping device (130), and has a centrifugal mass (50), of which either the component (136) or the centrifugal mass (50) has an element base (48) for centred accommodation on an output drive (11) by means of a bearing (56), **characterized in that** the component (50; 136) which has the element base (48) has recesses (84) radially outside the element base (48) for the passage and/or for the mounting of fastening elements (29) which connect a drive plate (25) for the drive-side transmission element (35) to the primary flange (31) of the latter, the drive plate (25) bridging an axial distance between the primary flange (31) and an axially elastic plate (15) which is fastened to the drive (1).

2. Torsional vibration damper according to Claim 1, **characterized in that** the drive-side transmission element (35) has a chamber (124) which is filled with viscous medium for receiving the peripheral spring assembly (129), which chamber (124) extends axially between the primary flange (31) and a sealing plate (122) which is assigned to the latter.

3. Torsional vibration damper according to Claim 2, **characterized in that** the chamber (124), which is filled with viscous medium, of the drive-side transmission element (35) is assigned a seal (162) which is active with respect to the recesses (84) of the component (50; 136) which has the element base (48).

4. Torsional vibration damper according to Claim 1, 2 or 3 having a component (136) in the form of a hub plate which has the actuating element (144) for a peripheral spring assembly (129) which is assigned to the damping device (130), **characterized in that** the centrifugal mass (50) of the output-side transmission element (116) is guided further to the radial inside with respect to the hub plate (136), and has the element base (48) there for positioning with respect to the bearing (56).

5. Torsional vibration damper according to Claim 1, 2 or 3, **characterized in that** the hub plate (136) is guided further to the radial inside with respect to the centrifugal mass (50), and has the element base (48) there for positioning with respect to the bearing (56).

6. Torsional vibration damper according to Claim 1, **characterized in that** the axially elastic plate (15) is fastened to the drive (1) together with a guiding hollow pin (40), the guiding hollow pin (40) being provided for centring the drive-side transmission element (35) at least during mounting on the drive (1).

7. Torsional vibration damper according to Claim 1 or 6, **characterized in that** the guiding hollow pin (40) engages axially into the region of extent of the drive plate (25) and the primary flange (31).

8. Torsional vibration damper according to one of Claims 1, 6 or 7, **characterized in that** the drive plate (25) is of substantially cup-shaped configuration having a considerable axial extent proportion for providing an axial passage space (28) for at least one moment-transmitting element (160).

9. Torsional vibration damper according to at least one of Claims 3 to 8, **characterized in that**, in addition to the first seal (162), the chamber (124) which is filled with viscous medium is assigned a second seal (164), axially adjacent to the output-side transmission element (116).

10. Torsional vibration damper according to one of Claims 3 to 9, **characterized in that** the first seal (162) acts with one fastening end (166) on the primary flange (31) of the drive-side transmission element (35) and is guided with one sealing end (170) into the region of extent of an axial projection (174) on the output-side transmission element (116) which the sealing end (117) encloses substantially radially.

11. Torsional vibration damper according to Claim 9, **characterized in that** the second seal (164) is fastened with one fastening end (168) to the centrifugal mass (50) of the output-side transmission element (116) and is guided with one sealing end (172) radially into the region of extent of the sealing plate (122) of the drive-side transmission element (35).

12. Torsional vibration damper according to one of Claims 9 to 11, **characterized in that** at least one of the two seals (162, 164) is received with its fastening end (166, 168) on the respective transmission element (35, 116) in such a way and is guided in the direction of the respectively other transmission element (35, 116) that its respective sealing end (170, 172) is aligned with respect to the lastmentioned transmission element (35, 116) substantially without contact.

13. Torsional vibration damper according to one of Claims 1 to 12, **characterized in that** the output-side actuating element (144) is formed on the output-side transmission element (116) for the peripheral spring assembly (129) by at least one covering plate (142, 143) which is fastened to the centrifugal mass (50) of the said transmission element (116) and is connected to a hub plate (136) via a radially first part (126) of the peripheral spring assembly (129), which hub plate (136) for its part is connected via a radially second part (128) of the peripheral spring assembly (129) to drive-side actuating elements (132) of the drive-side transmission element (35), the hub plate (136) being rotatable both relative to the drive-side transmission element (35) and to the output-side transmission element (116).

14. Torsional vibration damper according to one of Claims 1 to 13, **characterized in that** the output-side actuating element (144) is formed on the output-side transmission element (116) for the peripheral spring assembly (129) by a hub plate (136) which is fastened to the centrifugal mass (50) of the said transmission element (116) and is operatively connected via the peripheral spring assembly (129) to drive-side actuating elements (132) of the drive-side transmission element (35).

15. Torsional vibration damper according to one of Claims 1 to 14, **characterized in that**, on its centrifugal mass (50), the output-side transmission element (116) serves to receive a friction clutch (88).

16. Torsional vibration damper according to one of Claims 1 to 15, **characterized in that** the element base (48) is provided with a friction-reducing coating (80) on its internal diameter which faces the transmission input shaft (9).

## Revendications

1. Amortisseur de vibrations de torsion comportant un élément de transmission côté entrée (35) pourvu d'une bride primaire (31) et entraîné en rotation par un entraînement (1) et un élément de transmission côté sortie (116), pouvant différer en rotation par rapport à l'élément de transmission côté entrée (35) au moyen d'un dispositif d'amortissement (130), qui comprend un composant (136) présentant au moins un élément de commande côté sortie (144) pour un jeu de ressorts périphérique (129) associé au dispositif d'amortissement (130) et une masse d'équilibrage (50), parmi lesquels soit le composant (136) soit la masse d'équilibrage (50) comprend un pied d'élément (48) pour le montage centré sur un arbre de sortie (11) au moyen d'un palier (56), **caractérisé en ce que** le composant (50; 136) comprenant le pied d'élément (48) présente, radialement à l'extérieur du pied d'élément (48), des évidements (84) pour le passage et/ou pour le montage d'éléments de fixation (29), qui assemblent une plaque d'entraînement (25) pour l'élément de transmission côté entrée (35) à la bride primaire (31), la plaque d'entraînement (25) couvrant une distance axiale entre la bride primaire (31) et une plaque (15) axialement élastique fixée à l'entraînement (1).

2. Amortisseur de vibrations de torsion selon la revendication 1, **caractérisé en ce que** l'élément de transmission côté entrée (35) comporte, pour recevoir le jeu de ressorts périphérique (129), une chambre (124) remplie d'un fluide visqueux, qui s'étend axialement entre la bride primaire (31) et une tôle d'étanchéité (122) associée à celle-ci.

3. Amortisseur de vibrations de torsion selon la revendication 2, **caractérisé en ce qu'**un joint d'étanchéité (162) efficace par rapport aux évidements (84) du composant (50; 136) présentant le pied d'élément (48) est associé à la chambre (124) de l'élément de transmission côté entrée (35), remplie de fluide visqueux.

4. Amortisseur de vibrations de torsion selon la revendication 1, 2 ou 3 avec un composant (136) en forme de disque de moyeu, comprenant l'élément de commande (144) pour un jeu de ressorts périphérique (129) associé au dispositif d'amortissement (130), **caractérisé en ce que** la masse d'équilibrage (50) de l'élément de transmission côté sortie (116) est menée radialement vers l'intérieur plus loin que le disque de moyeu (136) et y présente le pied d'élément (48) pour le positionnement par rapport au palier (56).

5. Amortisseur de vibrations de torsion selon la revendication 1, 2 ou 3, **caractérisé en ce que** le disque de moyeu (136) est mené radialement vers l'intérieur plus loin que la masse d'équilibrage (50) et y présente le pied d'élément (48) pour le positionnement par rapport au palier (56).

6. Amortisseur de vibrations de torsion selon la revendication 1, **caractérisé en ce que** la plaque axialement élastique (15) avec un pivot creux de guidage (40) est fixée à l'entraînement (1), dans lequel le pivot creux de guidage (40) est prévu sur l'entraînement (1) pour le centrage de l'élément de transmission côté entrée (35) au moins pendant un montage.

7. Amortisseur de vibrations de torsion selon la revendication 1 ou 6, **caractérisé en ce que** le pivot creux de guidage (40) s'engage axialement dans la zone d'extension de la plaque d'entraînement (25) et la bride primaire (31).

8. Amortisseur de vibrations de torsion selon la revendication 1, 6 ou 7, **caractérisé en ce que** la plaque d'entraînement (25) est sensiblement en forme de pot avec une importante partie d'extension axiale pour procurer un espace de passage axial (28) pour au moins un élément (160) de transmission de couple.

9. Amortisseur de vibrations de torsion selon au moins une des revendications 3 à 8, **caractérisé en ce qu'**en plus du premier joint d'étanchéité (162), un deuxième joint d'étanchéité (164) axialement voisin de l'élément de transmission côté sortie (116) est associé à la chambre (124) remplie de fluide visqueux.

10. Amortisseur de vibrations de torsion selon l'une quelconque des revendications 3 à 9, **caractérisé en ce que** le premier joint d'étanchéité (162) s'engage par une extrémité de fixation (166) sur la bride primaire (31) de l'élément de transmission côté entrée (35) et est mené avec une extrémité d'étanchéité (170) dans la zone d'extension d'un épaulement axial (174) sur l'élément de transmission côté sortie (116), que l'extrémité d'étanchéité (117) entoure essentiellement radialement.

11. Amortisseur de vibrations de torsion selon la revendication 9, **caractérisé en ce que** le deuxième joint d'étanchéité (164) est fixé par une extrémité de fixation (168) sur la masse d'équilibrage (50) de l'élément de transmission côté sortie (116) et est mené avec une extrémité d'étanchéité (172) radialement dans la zone d'extension de la tôle d'étanchéité (122) de l'élément de transmission côté entrée (35).

12. Amortisseur de vibrations de torsion selon l'une quelconque des revendications 9 à 11, **caractérisé en ce qu'**au moins un des deux joints d'étanchéité (162, 164) est appliqué avec son extrémité de fixation (166, 168) sur l'élément de transmission respectif (35, 116) et est mené en direction de l'autre élément de transmission (35, 116), de telle manière qu'il s'aligne avec son extrémité d'étanchéité respective (170, 172) essentiellement sans contact par rapport au dernier élément de transmission cité (35, 116).

13. Amortisseur de vibrations de torsion selon l'une quelconque des revendications 1 à 12, **caractérisé en ce que** l'élément de commande côté sortie (144) sur l'élément de transmission côté sortie (116) pour le jeu de ressorts périphérique (129) est formé par au moins une tôle de couverture (142, 143) fixée sur la masse d'équilibrage (50) de cet élément de transmission (116), qui est reliée par une radialement première partie (126) du jeu de ressorts périphérique (129) à un disque de moyeu (136), qui est de son côté en liaison par une radialement deuxième partie (128) du jeu de ressorts périphérique (129) avec des éléments de commande côté entrée (132) de l'élément de transmission côté entrée (35), dans lequel le disque de moyeu (136) peut tourner relativement aussi bien par rapport à l'élément de transmission côté entrée (35) que par rapport à l'élément de transmission côté sortie (116).

14. Amortisseur de vibrations de torsion selon l'une quelconque des revendications 1 à 13, **caractérisé en ce que** l'élément de commande côté sortie (144) sur l'élément de transmission côté sortie (116) pour le jeu de ressorts périphérique (129) est formé par un disque de moyeu (136) fixé sur la masse d'équilibrage (50) de cet élément de transmission (116), qui est en liaison active par le jeu de ressorts périphérique (129) avec des éléments de commande côté entrée (132) de l'élément de transmission côté entrée (35).

15. Amortisseur de vibrations de torsion selon l'une quelconque des revendications 1 à 14, **caractérisé en ce que** l'élément de transmission côté sortie (116) sert, sur sa masse d'équilibrage (50), à recevoir un accouplement par friction (88).

16. Amortisseur de vibrations de torsion selon l'une quelconque des revendications 1 à 15, **caractérisé en ce que** le pied d'élément (48) est pourvu d'un revêtement réduisant le frottement (80) sur son diamètre intérieur tourné vers l'arbre d'entrée de la boîte de vitesses (9).
